# EUROPEAN PATENT SPECIFICATION

(11) **EP 0 584 113 B1**
(45) Date of publication and mention of the grant of the patent: **08.01.1997**
(21) Application number: 92909304.5
(22) Date of filing: 14.05.1992
(51) Int. Cl.: A21D 13/00, A21C 11/00

(54) **IMPROVEMENTS IN AND RELATING TO THE MANUFACTURE OF DOUGH PRODUCTS**
HERSTELLUNG VON TEIGWAREN
AMELIORATIONS APPORTEES A LA PREPARATION DE PRODUITS A BASE DE PATE

(30) Priority: 14.05.1991 GB 9110445
(43) Date of publication of application: 02.03.1994
(73) Proprietor: UNITED BISCUITS (UK) LIMITED, West Drayton, Middlesex UB7 7PR (GB)
(72) Inventor: WILKES, Malcolm, Stuart Thornbury Cottage, Berkshire, SL6 9NZ (GB); HINE, Alan 11 Butt Lane, South Humberside DN37 7BB (GB)
(74) Representative: Bardo, Julian Eason
(86) International application number: GB9200872
(87) International publication number: WO9220234

(56) References cited:
- BE-A- 826 457
- GB-A- 2 005 979
- NL-A- 9 000 395
- US-A- 4 417 867
- US-A- 4 645 673

## Description

This invention relates to the manufacture of dough products and, in particular, to the manufacture of pizzas.

Pizzas have in recent years become a very popular food product. The preparation of home-made pizzas is time-consuming because of the need for the dough to prove. Further, unless the conditions for the proving step are suitable, it is difficult to achieve a satisfactory pizza. There is a demand for ready-made pizzas that simply require heating by the consumer, or for ready-made pizza bases, to which a topping may be added before cooking.

In one known method for manufacturing pizzas, a dough is formed into a sheet using rollers and oval shaped pieces are cut out from the sheet, the oval pieces being cut such that their longest diameter coincides with the direction in which the sheet is travelling on leaving the rollers. The dough pieces shrink along a lengthwise direction such that they are essentially round. The round dough pieces are proved and then baked to give a partially cooked pizza base. After cooling, a desired filling, for example, tomato sauce and mozzarella cheese, is spread on the upper surface of the base and the base, with the topping, is frozen.

In another known method, the dough is divided into dough balls of approximately equal size and each ball is placed in a tray that has a flange or rim. The dough ball is pressed onto the tray using a press head that is provided with a peripheral flange or rim that co-operates with the flange or rim of the tray. The dough spreads outwardly, the outward movement of dough being obstructed and constrained by the flanges or rims of the tray and press head. The pressing step is normally repeated because, after the first pressing, the dough shrinks. The pressed product has an outer periphery, the configuration of which is determined by the constraining means.

The pizzas made in the known methods described above tend to be of uniform configuration and are thus perceived by the consumer to be "artificially-made" rather than "home-made". They are consequently less attractive to the consumer than home-made pizzas.

In another known method (U.S. Patent Specification 4,696,823), a pizza base is made by pressing a dough ball with a press that has a concave bottom surface and subsequently forming indentations in the upper surface of the dough either by pressing the dough with a second press having projections for forming the indentations, or by rolling along the surface of the dough a rotatable cluster of spheres. The indentations in the upper surface of the dough are intended to give the finished product an uneven surface that is similar to that of a manually formed pizza.

The present invention provides a process for making a pizza base, comprising the steps of:
(i) forming a dough comprising flour, a raising agent and water;
(ii) placing a portion of the dough on a receiving surface of a pressing device having a pressing surface opposed to the receiving surface, the pressing surface being so shaped that the central portion of the pressing surface is at least as close to the receiving surface as is the outer portion, and being of a diameter that is less than the desired diameter of the pizza base;
(iii) pressing the pressing surface and the receiving surface together so as to flatten the dough portion;
(iv) positioning the flattened dough portion obtained in step (iii) on a receiving surface of a pressing device having a pressing surface opposed to the receiving surface, the pressing surface being so shaped that the central portion of the pressing surface is at least as close to the receiving surface as is the outer portion, and being of a diameter that is less than the desired diameter of the pizza base and pressing that pressing surface and the associated receiving surface together so as to flatten further the flattened dough portion, the movement of the dough radially outwards along the receiving surface being unobstructed; and
(v) baking the dough portion obtained in step (iv).

By pressing the dough in two pressing steps, there being used in each step a pressing device having a pressing surface of diameter less than the desired diameter of the pizza base that is to be formed, the pressing surface being so shaped that the central portion of the pressing surface is at least as close to the receiving surface as is the outer portion, it is possible to obtain a flattened dough portion having an edge portion that has been relatively lightly pressed as compared with a central portion of the dough. It is thought that pressing the dough in the manner described interferes with the ability of the central portion of the dough to prove, either by degassing the said central portion or by otherwise disrupting the internal structure of the dough. That could lead to the elimination in the central portion of the gas nucleation sites that, in the cooking of food products containing yeast or other raising agents, cause the food products to rise as a result of the gas formed. The internal structure of the edge portion, on the other hand, remains relatively unaltered. Thus, on cooking the dough, the central portion of the dough rises only slightly, while the peripheral portion rises by a relatively large amount.

If the dough portion is pressed twice in succession with the same pressing surface of the configuration already described, or with first and second pressing surfaces of that configuration, a pizza base having an attractive, home-made appearance can be obtained. After pressing a relatively elastic dough of the type usually used in the manufacture of pizzas, there is normally a tendency for the pressed dough portion partially to shrink back towards its configuration prior to pressing because of the elasticity of the dough. If a dough portion is pressed once and then, after temporarily releasing the pressure on the dough, pressed a second time, a flattened dough portion may be obtained which does not shrink, or shrinks only by a small amount. If the movement of the dough outwards along the receiving surface is unrestricted, at least in the final pressing step, it is possible to obtain a pizza base that is adequately flat but also appears home-made.

In the first pressing step (steps (ii) and (iii)) the movement of the dough radially outwards along the receiving surface may be unobstructed; it may, however, be advantageous for the dough to be constrained within a ring, the diameter of which approximates or is only slightly larger than that of the pressing surface. The use of a constraining means in the first step enables pizza bases that are substantially round to be obtained consistently while, because no constraining means is used in the final pressing step, the bases are nonetheless relatively non-uniform in appearance as compared with, for example, pizza bases made by a method in which a constraining means is used in both pressing steps. That is particularly advantageous because, while the bases are non-uniform in appearance, they are sufficiently uniform in their dimensions that they may be packaged without difficulty in packages of uniform size having dimensions that exceed only slightly those of the pizza bases.

In the first pressing step, the dough is preferably so pressed that, immediately after removal of the pressing device, it has a diameter of not less than 75% of the desired final diameter, that is, the diameter obtaining immediately after removal of the pressing device after the second pressing step.

The pressing steps of pressing together a pressing surface and a receiving surface involve relative movement of the pressing surface towards the receiving surface. In an example of the invention to be described below the pressing surface moves and the receiving surface is stationary but, if desired, the pressing surface may be stationary and the receiving surface move. It will generally be convenient for the pressing surface to be vertically above the receiving surface but the arrangement can be inverted so that the receiving surface is vertically above the pressing surface.

The minimum distance between the pressing surface and the receiving surface during the pressing cycle is referred to hereinafter as the "clearance". The time period during which the pressing surface is in contact with the dough during the pressing cycle is referred to hereinafter as the "pressing time". The total length of time during which the pressing surface and the receiving surface are positioned at the clearance in the course of a pressing cycle is referred to hereinafter as the "dwell time".

It will generally be desirable for each pressing step to comprise a first phase in which at least one of the pressing surface and the receiving surface is moved towards the other, the dough being pressed between the two surfaces, a second phase in which the two surfaces are maintained at a constant distance apart, that distance being the clearance, and a third phase in which the two surfaces are separated by means of a movement of at least one of the surfaces relative to the other.

It will be appreciated that appropriate conditions during the first and second pressing steps will need to be selected according to the nature of the dough that is used. For example, if it is desired to make a pizza base of given dimensions, then the clearance will generally need to be smaller in a process in which a dough of relatively high intrinsic elasticity is used than in a process in which a dough of relatively low intrinsic elasticity is used, assuming that all other conditions are kept the same. Preferably, the pressing device used in the first and second pressing steps is provided with a stop means that will stop the advance of the moving pressing or receiving surface when that surface is positioned at a distance from the other surface that corresponds to the desired clearance. The stop means is preferably adjustable such that the clearance can be adjusted.

The force with which the dough is pressed is preferably sufficient that, given the selected pressing time, the distance between the pressing surface and the receiving surface is reduced to the desired clearance, notwithstanding the resistance of the dough.

For a given dough portion and a given pressing device, the diameter of the pizza base produced will depend on the clearance. Decreasing the clearance will generally result in an increase in the diameter of the resulting base and, because more dough is squeezed outwardly from the central portion to the outer portion of the dough portion, in an increase in the ratio of the depth of the edge portion to the depth of the central portion of the pizza base so obtained. Provided that the pressing time is sufficient to allow the desired clearance to be achieved, changing the pressing time will not affect the diameter significantly. Further, the dimensions of the pizza base will not be affected significantly by changing the force applied to the dough except possibly in those cases in which a desired clearance has been selected by means of a stop means associated with the pressing surface or the receiving surface and in which the force is insufficient, having regard to the resistance of the dough, for the desired clearance to be achieved. It is preferred, however, that the force applied should be such that, having regard to the pressing time and the nature of the dough, the clearance selected by use of the stop means is achieved. In a typical case, the maximum force on the dough during the pressing cycle may be from 1000N to 6000N, especially from 2500N to 4000N.

For a dough, the elasticity of which is of the order of that of doughs typically used in the manufacture of pizza bases, the pressing time is preferably of the order of up to 6 seconds, more preferably up to 4 seconds and especially from 0.25 to 3 seconds. The dwell time may be, for example, from 0.1 to 3 seconds and is preferably from 0.2 to 2.5 seconds. The clearance in the first pressing step may be, for example, from 1.5 to 12mm. In the second pressing step, a clearance of, for example, 1.5 to 5mm, preferably from 2 to 4mm will generally be appropriate. As the dough will normally rise after the pressing step, the thickness of the central portion of the baked pizza base will generally be significantly greater than the clearance in the second pressing step. By way of example, for a dough of moderate elasticity, a pressing time of about 3 to 4 seconds, a dwell time of about 2 seconds with a clearance of 2mm might be suitable for both pressing steps. The pressing conditions in the second pressing step (step (iv) may be the same as, or different from, those of the first pressing step (step (iii)). For example, if desired, the clearance may be greater in the first pressing step than in the second.

The selection of suitable doughs, of suitable pressing times, and clearances, and of suitable values for the force with which the press is to be applied will be a matter of routine experiment for the person skilled in the art.

Advantageously, the pressing surface has a flat central portion and an outer portion that surrounds the central portion, the outer portion extending outwardly from the edge of, and being inclined relative to the plane of, the central portion. Such a configuration is particularly advantageous because it results in a pizza base, the thickness of which increases relatively gradually in a direction from a central portion of the base towards the edge. Further, it facilitates the pressing of the dough. The outer portion is preferably inclined at an angle of not greater than 10° and, more preferably, not greater than 5° to the plane of the central portion.

Preferably, the pressing surface of the pressing device is circular. The pressing surface is advantageously surrounded by a peripheral surface that extends, in a direction away from the receiving surface, outwardly from the edge of, and at an angle of not less than 60° relative to the plane of, the pressing surface. The provision of the peripheral surface may reduce the tendency of the dough to curl upwardly about the pressing surface and may avoid the formation of a pressed dough portion the upper surface of which has a discontinuity, which would reduce the attractiveness of the pizza base.

The steps (ii) and (iii) may be carried out using a first pressing device and the step (iv) may be carried out using another pressing device. The pressing surface of the pressing device used in step (iv) may be of the same configuration or of a different configuration from the pressing surface of the pressing device used in step (iii). The receiving surface may be flat. The receiving surface may, however, have an uneven surface, for example, it may have a flat central region surrounded by a plurality of shallow concentric circular recesses: such an uneven surface may assist in reducing the tendency of the dough portion to shrink back after pressing. When a receiving surface having an uneven surface is used, the clearance will be measured between the pressing surface and the closest extremity of the part of the receiving surface opposed thereto.

The time period between removal of the pressing surface after the first pressing step and applying the pressing surface for the second time is advantageously at least 1 minute; the said time period is preferably not more than 5 minutes and is more preferably about 2 minutes. Time periods of less than 1 minute may be used for doughs in which a chemical relaxing agent, for example L-cysteine is present. The use of doughs without such relaxing agents is preferred.

The raising agent is preferably yeast. It will be appreciated that, where yeast is used as the raising agent, it will be preferable for the dough portion to be proved prior to pressing. The proving step inter alia allows for the formation of a "skin" around the dough portion, which is generally regarded as contributing to the manufacture of a satisfactory pizza base. As is usual in the manufacture of pizzas, the dough base, optionally with the topping in situ, may be proved again immediately prior to cooking. The conditions for the proving steps may be those usually used in the manufacture of yeast-containing products, for example, the dough may be placed in a proving cabinet at a temperature of about 38°C. The formation of the skin referred to above may be enhanced by maintaining a low relative humidity, for example, a humidity of less than 50%, and preferably less than 35%, in the proving cabinet.

The dough may in addition contain one or more further ingredients selected from salt, sugar, edible oils.

It will be appreciated that the elasticity of the dough will depend on the type of flour used, the amount of water added, the amount of work carried out on the dough on mixing and the temperature, as well as the presence of any dough improvers or dough relaxants. For example, a dough made from a flour of relatively high protein content will generally be more elastic than a dough that differs only in that it is made from a flour of relatively low protein content.

The water will generally be added to a mixture containing the yeast and other dry ingredients and the combined ingredients mixed to form a dough of relatively high elasticity which may easily be formed into a coherent mass. The temperature of the mixture may be monitored during mixing and the dough will advantageously be at a temperature of from 27°C to 29°C when mixing is ceased.

Advantageously, a suitable edible particulate material, for example, breadcrumbs, is sprinkled onto the receiving surface before the pressing steps and/or onto the upper surface of the dough portion before the final pressing step. The particulate material penetrates the dough during the pressing step and the holes so formed enable steam to escape during baking so that the formation of large bubbles is substantially avoided.

If desired, a pizza topping, for example, mozzarella cheese and tomato sauce may be applied to the pizza before baking. Preferably, however, the pizza base is baked without any topping, baking being stopped before the base is completely cooked. The base so obtained may subsequently be combined with a topping and sold to a consumer who may complete the cooking. If desired, some or all of the topping may be added by the consumer. The product for sale to the consumer may, if desired, be frozen and the consumer may complete the cooking and some or all of the topping may be added by the consumer.

The present invention also provides a pizza base made by a process as described above.

One pressing device will now be described in detail, by way of illustration, with reference to the accompanying drawing, in which:

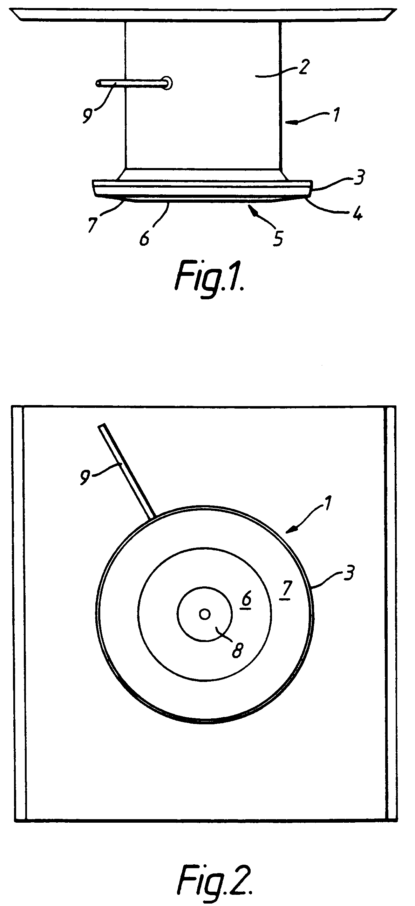

Fig. 1 is a side view of a pressing device suitable for use in a process for the manufacture of pizzas, and
Fig. 2 is an underneath plan view of the pressing device of Fig. 1.

The drawings illustrate a pressing device 1 having a die head that has a pressing surface of a configuration such that the central portion is, in use of the pressing device, closer to the surface on which the dough is received than is the outer portion of the pressing surface.

The pressing device 1 has a body portion 2 of cylindrical configuration at the lower extremity of which is provided a die head. The die head has a cylindrical upper portion, beneath which there is a tapering portion that tapers inwardly slightly, for example, by 16° (included angle 32°), forming a tapered outer peripheral surface 3. At a lower edge of the peripheral surface 3 is a discontinuity 4 that separates the said peripheral surface from a pressing surface 5. The pressing surface 5 is constituted by a circular flat central portion 6 at the lower extremity of the die head and an outer portion 7 that extends outwardly from the circular edge of the central portion 6 to the discontinuity 4, the outer portion 7 being inclined gently upwards, for example, at an angle of 4.5° relative to the plane of the central portion 6. Typically, the overall diameter of the pressing surface will be of the order of 200 mm and the diameter of the central portion 6 will be of the order of 130 mm.

The drawing also shows a disc 8 provided in the middle of the central portion 6 and an air line 9 by means of which compressed air can be passed to the die head, the air exiting through openings (not shown) in or around the disc 8. Compressed air is passed to the die head when, after pressing, it is desired to separate the die head from the dough. That technique is conventional in the pressing of dough using a press head and will not be described further.

The press is so arranged that the minimum distance between the central portion 6 of the pressing surface and the receiving surface during the pressing cycle corresponds to the desired clearance. For example, the press may be provided with a stop means (not shown) which stops the advance of the pressing surface when the distance between the central portion 6 and the receiving surface is, for example, approximately 2mm, the stop means preferably being adjustable so that the clearance may be adjusted.

In use, the die head 1 is mounted in a press such that the central portion 6 of the pressing surface is horizontal, the press including a receiving surface (not shown) opposed to the pressing surface.

A dough portion may then be placed underneath the die head and the die head pressed downwards onto the dough so that the pressing surface contacts the dough, the dough portion being flattened.

It will be appreciated that, while a die head having a pressing surface that has a flat central portion and an inclined outer portion has been described, die heads of other configurations may be used in accordance with the invention. For example, the inclined outer portion 7 may be absent, the pressing surface consisting only of a circular flat surface provided at the lower extremity of the tapered outer peripheral surface 3.

Further, a dough portion may be pressed in a first step in which a constraining means is provided to limit movement of the dough radially outwards along the receiving surface. For such a process a die head may be used that is of a similar configuration to that shown in the drawing except that the tapered peripheral portion 3 is desirably omitted, the part of the die head immediately above the discontinuity 4 being of cylindrical configuration. An annular constraining means will then be provided either on the die head or on the receiving surface, or in the form of separate cooperating parts on the die head and the receiving surface, the annular means having a diameter approximating that of the die head and being arranged concentrically with the die head. On pressing, the spreading of the dough beyond the periphery of the die head is then prevented in the first pressing step by the annular constraining means.

The manufacture of one type of pizza base in accordance with the invention will now be described, by way of illustration.

### Example

A dough is formed from the following ingredients:

| Ingredient | % (by weight) |
|---|---|
| Flour (patent flour having 13% protein) | 55.0 |
| Malted Wheat Flour | 1.0 |
| Salt | 2.0 |
| Sugar | 1.5 |
| Vegetable Oil | 4.5 |
| Yeast - fresh compressed | 4.0 |
| Water | 32.0 |

The water at 22°C is added to the rest of the dry mix in a Tweedy T30 high speed mixer. 5 Whrs of work per kilo is put into the mix, over a time period of about 90 seconds. The final dough temperature is not less than 27°C. The water content of the dough, including yeast water, which makes up two thirds of the total weight of the yeast, is 62% by weight, based on the total weight of the flour, including malted wheat flour.

The dough is divided manually or mechanically into 200g pieces and the dough pieces are moulded into "dough balls". The dough balls are placed on aluminium pizza tins which have been covered with 3g of MS release agent (a proprietary release agent) and 5g "Pandora" Japanese-style breadcrumbs, deposited centrally.

The dough balls are pressed by a roller or by hand to 10cm diameter to form "dough pucks". The dough pucks are proved for 15 minutes in a proving cabinet at 38°C with relative humidity of less than 35%, the relatively low humidity allowing the surface of the dough pucks to form a skin of slightly hardened dough.

A single head press having a die head of the type described above with reference to the drawing is used to press out the dough pucks to give 90% of the desired diameter of the pizza base to be formed. The flat central portion 6 of the die head has a diameter of 132 mm and the outer diameter of the outer portion 7 is 207 mm. The die head is pressed down to a clearance of 2 mm and is maintained substantially in that position for a dwell time of 2 seconds during which it presses against the dough. The pressing time is less than 4 seconds. The die head is then raised.

The surface of the dough should have a cracked and mosaic-like appearance. The pressed pucks are lightly oiled and the dough is then allowed to "rest" for 5 minutes before the second press, during which time the dough's thickness increases.

The dough is then pressed a second time. Again the die head is pressed down to a clearance of 2 mm and is maintained substantially in that position for a dwell time of 2 seconds, during which it presses against the dough. The pressing time is less than 3.5 seconds. The die head is then raised. A flattened dough piece of overall diameter 235 mm is obtained, including a 20 mm wide, rounded raised edge. This edge is obtained because the pressing surface of the press head used has a smaller diameter than the desired final pizza base diameter, at least the second pressing step being performed such that dough is extruded out around the periphery of the pressing surface. Immediately after pressing, the central area of the flattened dough portion is approximately 2 mm deep and the edge portion has a maximum depth of approximately 13mm. The depths of the respective portions may conveniently be measured by freezing the dough portions, cutting the frozen portions along a diameter, and using any suitable measuring means to ascertain the height of the base at the centre and in the vicinity of the ends of the diameter.

The ratio of the dough weight of a central portion having a diameter of 100 mm to the dough weight of the remaining dough excluding the central portion is 0.35. 15g of mozzarella cheese is sprinkled onto the dough leaving a 25 mm border free of cheese.

The flattened dough pieces are proved in a proving cabinet at 38°C for 15 minutes with a relative humidity of 75%. The pizzas are then baked in a travelling forced convection oven. The following baking profile is used.

| Zone | 1 | 2 | 3 | Time |
|---|---|---|---|---|
| | 250°C | 250°C | 225°C | 5 minutes |

After baking, the product has the following dimensions:

| | |
|---|---|
| Diameter: | 227 ±5mm |
| Rim height: | 15 ±3mm |
| Central height: | 4 ±1mm |

The pizza base is of irregular shape, with a deep rim, and a shallow central portion covered in well-browned mozzarella cheese.

The surface colour of the base is golden brown. The base has an open crumb texture with large air cells of variable size, and is perceived by the consumer to be soft, yet chewy, with some crispness. The base so obtained can be frozen to preserve it for subsequent use.

After topping with sauce, cheese and any additional toppings, the pizza may be baked from frozen in a domestic oven directly on the oven rack. For fan assisted ovens, a temperature of 220°C for 15-18 minutes is suitably used, although the cooking time depends on type of oven and amount of topping used.

The baked pizza has a very crisp crust and rim with an open soft and chewy crumb and has a home-cooked taste.

## Claims

1. A process for making a pizza base, comprising the steps of:
(i) forming a dough comprising flour, a raising agent and water;
(ii) placing a portion of the dough on a receiving surface of a pressing device having a pressing surface opposed to the receiving surface, the pressing surface being so shaped that the central portion of the pressing surface is at least as close to the receiving surface as is the outer portion, and the pressing surface being of a diameter that is less than the desired diameter of the pizza base;
(iii) pressing the pressing surface and the receiving surface together so as to flatten the dough portion;
(iv) positioning the flattened dough portion obtained in step (iii) on a receiving surface of a pressing device having a pressing surface opposed to the receiving surface, the pressing surface being so shaped that the central portion of the pressing surface is at least as close to the receiving surface as is the outer portion, and being of a diameter that is less than the desired diameter of the pizza base and pressing that pressing surface and the associated receiving surface together so as to flatten further the flattened dough portion, the movement of the dough radially outwards along the receiving surface being unobstructed; and
(v) baking the dough portion obtained in step (iv).

2. A process as claimed in claim 1, in which the pressing surface has a flat central portion and an outer portion that surrounds the central portion, the outer portion extending outwardly from the edge of, and being inclined relative to the plane of, the central portion.

3. A process as claimed in claim 2, in which the outer portion is inclined at an angle of not greater than 10° relative to the plane of the central portion.

4. A process as claimed in any of claims 1 to 3, in which the steps (ii) and (iii) are carried out using a first pressing device and the step (iv) is carried out using another pressing device.

5. A process as claimed in any of claims 1 to 4, in which the time period between removal of the pressing surface after the step (iii) and applying the pressing surface in step (iv) is at least 1 minute.

6. A process as claimed in any of claims 1 to 5, wherein the raising agent is yeast.

7. A process as claimed in any one of claims 1 to 6, wherein the pressing surface is circular.

8. A process as claimed in any one of claims 1 to 7, wherein the pressing surface is surrounded by a peripheral surface that extends, in a direction away from the receiving surface, outwardly from the edge of, and at an angle of not less than 60° relative to the plane of, the pressing surface.

9. A process as claimed in any one of claims 1 to 8, wherein the dough portion is so pressed in the first pressing step that, immediately after removal of the pressing device, it has a diameter of not less than 75% of the diameter obtaining immediately after removal of the pressing device after the second pressing step.

10. A process as claimed in any one of claims 1 to 9, wherein a pizza topping is applied to the flattened dough portion prior to cooking.

11. A process as claimed in claim 10 in which the flattened dough portion is partially cooked and the topping is added to the partially cooked dough portion.

12. A pizza base made by a process as claimed in any of claims 1 to 11 or a pizza comprising a said pizza base.

## Patentansprüche

1. Ein Verfahren für das Herstellen eines Pizza-Bodens, umfassend die Schritte:
(i) Herstellen eines Mehl , ein Treibmittel und Wasser enthaltenden Teiges;
(ii) Plazieren einer Teigportion auf einer Aufnahmefläche einer Preßeinrichtung mit einer Preßfläche gegenüber der Aufnahmefläche, welche Preßfläche so geformt ist, daß der zentrale Abschnitt der Preßfläche mindestens so dicht der Aufnahmefläche ist wie der äußere Abschnitt, und wobei die Preßfläche einen Durchmesser aufweist, der kleiner ist als der gewünschte Durchmesser des Pizza-Bodens;
(iii) Zusammenpressen der Preßfläche und der Aufnahmefläche, um so die Teigportion abzuflachen;
(iv) Positionieren der abgeflachten Teigportion, erhalten in Schritt (iii), auf einer Aufnahmefläche einer Preßeinrichtung mit einer Preßfläche gegenüber der Aufnahmefläche, welche Preßfläche so geformt ist, daß der zentrale Abschnitt der Preßfläche mindestens so dicht an der Aufnahmefläche ist wie der äußere Abschnitt und einen Durchmesser aufweist, der kleiner ist als der gewünschte Durchmesser des Pizza-Bodens, und Zusammenpressen der Preßfläche und der zugeordneten Aufnahmefläche, um so die abgeflachte Teigportion weiter abzuflachen, wobei die Bewegung des Teiges radial nach außen auf der Aufnahmefläche unbeschränkt ist; und
(v) Backen der in Schritt (iv) erhaltenen Teigportion.

2. Ein Verfahren nach Anspruch 1, bei dem die Preßfläche einen flachen zentralen Abschnitt und einen äußeren Abschnitt aufweist, der den zentralen Abschnitt umgibt, welcher äußere Abschnitt sich von der Kante des zentralen Abschnitts nach außen erstreckt und relativ zu der Ebene des zentralen Abschnitts schräg verläuft.

3. Ein Verfahren nach Anspruch 2, bei dem der äußere Abschnitt unter einem Winkel von nicht mehr als 10° relativ zu der Ebene des zentralen Abschnitts schräg verläuft.

4. Ein Verfahren nach einem der Ansprüche 1 bis 3, bei dem die Schritte (ii) und (iii) ausgeführt werden unter Verwendung einer ersten Preßeinrichtung und der Schritt (iv) unter Verwendung einer anderen Preßeinrichtung ausgeführt wird.

5. Ein Verfahren nach einem der Ansprüche 1 bis 4, bei dem die Zeitperiode zwischen dem Entfernen der Preßfläche nach dem Schritt (iii) und dem Einwirken der Preßfläche im Schritt (iv) mindestens eine Minute beträgt.

6. Ein Verfahren nach einem der Ansprüche 1 bis 5, bei dem das Treibmittel Hefe ist.

7. Ein Verfahren nach einem der Ansprüche 1 bis 6, bei dem die Preßfläche rund ist.

8. Ein Verfahren nach einem der Ansprüche 1 bis 7, bei dem die Preßfläche von einer peripheren Oberfläche umschlossen ist, die sich in eine Richtung weg von der Aufnahmefläche nach außen von der Kante der Preßfläche erstreckt und unter einem Winkel von nicht weniger als 60° relativ zu der Ebene der letzteren.

9. Ein Verfahren nach einem der Ansprüche 1 bis 8, bei dem die Teigportion in dem ersten Preßschritt derart gepreßt wird, daß unmittelbar nach dem Entfernen der Preßeinrichtung sie einen Durchmesser von nicht weniger als 75 % des Durchmessers aufweist, den man unmittelbar nach dem Entfernen der Preßeinrichtung nach dem zweiten Preßschritt erhält.

10. Ein Verfahren nach einem der Ansprüche 1 bis 9, bei dem ein Pizza-Belag auf die abgeflachte Teigportion vor dem Ausbacken aufgebracht wird.

11. Ein Verfahren nach Anspruch 10, bei dem die abgeflachte Teigportion teilweise gebacken wird und der Belag der teilweise gebackenen Teigportion zugefügt wird.

12. Ein Pizza-Boden, hergestellt durch das Verfahren nach einem der Ansprüche 1 bis 11 oder eine Pizza mit einem solchen Pizza-Boden.

## Revendications

1. Procédé de préparation d'un fond de pizza, comprenant les étapes consistant à :
(i) former une pâte comprenant de la farine, un agent levant à lever et de l'eau,
(ii) placer une portion de la pâte sur une surface réceptrice d'un dispositif de compression comportant une surface de compression opposée à la surface réceptrice, la surface de compression étant ainsi formée que la partie centrale de la surface de compression est au moins aussi proche de la surface réceptrice que l'est la partie extérieure, et la surface de compression présentant un diamètre qui est inférieur au diamètre désiré du fond de pizza,
(iii) pousser la surface de compression et la surface réceptrice l'une vers l'autre de manière à aplatir la portion de pâte,
(iv) positionner la portion de pâte aplatie obtenue à l'étape (iii) sur une surface réceptrice d'un dispositif de compression comportant une surface de compression opposée à la surface réceptrice, la surface de compression étant ainsi formée que la partie centrale de la surface de compression est au moins aussi proche de la surface réceptrice que l'est la partie extérieure, et présentant un diamètre qui est inférieur au diamètre désiré du fond de pizza, et presser cette surface de compression et la surface réceptrice associée l'une vers l'autre de manière à aplatir davantage la portion de pâte aplatie, le mouvement radial de la pâte vers l'extérieur le long de la surface réceptrice n'étant pas gêné, et
(v) cuire la portion de pâte obtenue à l'étape (iv).

2. Procédé selon la revendication 1, dans lequel la surface de compression comporte une partie centrale plate et une partie extérieure qui entoure la partie centrale, la partie extérieure s'étendant vers l'extérieur à partir du bord de la partie centrale et étant inclinée par rapport au plan de la partie centrale.

3. Procédé selon la revendication 2, dans lequel la partie extérieure est inclinée suivant un angle non supérieur à 10° par rapport au plan de la partie centrale.

4. Procédé selon l'une quelconque des revendications 1 à 3, dans lequel les étapes (ii) et (iii) sont exécutées à l'aide d'un premier dispositif de compression et l'étape (iv) est exécutée à l'aide d'un autre dispositif de compression.

5. Procédé selon l'une quelconque des revendications 1 à 4, dans lequel l'intervalle de temps entre l'enlèvement de la surface de compression à l'issue de l'étape (iii) et l'application de la surface de compression à l'étape (iv) est d'au moins 1 minute.

6. Procédé selon l'une quelconque des revendications 1 à 5, dans lequel l'agent levant est de la levure.

7. Procédé selon l'une quelconque des revendications 1 à 6, dans lequel la surface de compression est circulaire.

8. Procédé selon l'une quelconque des revendications 1 à 7, dans lequel la surface de compression est entourée par une surface périphérique qui s'étend, dans une direction s'éloignant de la surface réceptrice, vers l'extérieur à partir du bord de la surface de compression et suivant un angle non inférieur à 60° par rapport au plan de la surface de compression.

9. Procédé selon l'une quelconque des revendications 1 à 8, dans lequel la portion de pâte est comprimée au cours de la première étape de compression de telle façon que, juste après enlèvement du dispositif de compression, elle présente un diamètre ne représentant pas moins de 75 % du diamètre obtenu juste après enlèvement du dispositif de compression à l'issue de la seconde étape de compression.

10. Procédé selon l'une quelconque des revendications 1 à 9, dans lequel on applique une garniture pour pizza à la portion de pâte aplatie avant de la cuire.

11. Procédé selon la revendication 10, dans lequel la portion de pâte aplatie est partiellement cuite, et la garniture est ajoutée à la portion de pâte partiellement cuite.

12. Fond de pizza préparé à l'aide d'un procédé selon l'une quelconque des revendications 1 à 11, ou pizza comprenant un dit fond de pizza.
